# EUROPEAN PATENT SPECIFICATION

(11) **EP 3 552 923 B1**
(45) Date of publication and mention of the grant of the patent: **05.10.2022**
(21) Application number: 17877587.0
(22) Date of filing: 25.08.2017
(51) Int. Cl.: B62B 7/08

(54) **FOLDABLE STROLLER FRAME AND FOLDABLE STROLLER**
ZUSAMMENKLAPPBARES KINDERWAGENGESTELL UND ZUSAMMENKLAPPBARER KINDERWAGEN
CADRE DE POUSSETTE PLIANT ET POUSSETTE PLIANTE

(30) Priority: 06.12.2016 CN 201611111214; 22.03.2017 CN 201710174861
(43) Date of publication of application: 16.10.2019
(73) Proprietor: Jiangsu Little Dinosaur Children's Products Group Co., Ltd., Shipu Qiandeng Town Kunshan City, Jiangsu 215343 (CN)
(72) Inventor: CAI, Shoujin, Kunshan Jiangsu 215343 (CN)
(74) Representative: Cabinet Laurent & Charras
(86) International application number: PCT/CN2017/099031
(87) International publication number: WO 2018/103377

(56) References cited:
- CN-A- 1 398 747
- CN-A- 101 898 575
- CN-A- 101 898 575
- CN-A- 106 515 833
- CN-A- 106 915 376
- CN-U- 204 368 228
- CN-U- 204 452 543
- CN-U- 204 452 543
- CN-U- 206 255 050
- CN-U- 206 255 050
- JP-A- 2011 148 449

## Description

### CROSS-REFERENCE TO RELATED APPLICATIONS

This application claims priority to Chinese patent application No.201710174861. 5 filed on March 22, 2017 and Chinese patent application No.201611111214. 1 filed on December 6, 2016, titled "Foldable Stroller Frame and Foldable Stroller".

### Technical Field

The present invention relates to the technical field of strollers and, more particularly, to a foldable stroller frame and a foldable stroller.

### Background

Strollers is a tool commonly found in daily life, such as a stroller for shopping, a stroller suitable for lying and sitting of babies, or the like. In order to facilitate carrying and storage when not in use, a baby stroller, for example, is generally configured to be foldable. Space occupied by the stroller is reduced by folding of the stroller.

There are a wide variety kinds of frames of the existing foldable strollers, but either itsstructure is much complex and structural strength is not high, or it is very inconvenient to be folded. Moremover, the foldable strollers are bulky after being folded, inconvenient for storage and placement, and can not be adapted to the user's space for holding. These drawbacks may cause inconvenience to the users, make the user experience poor, and not conducive to market promotion.

Chinese patent publication number CN1398747A discloses a pram that includes two racks, one on right and another on left, a seat, front wheels, and rear wheels, where each rack includes at least front leg, rear leg, front and rear bracket rods, and a push handle rod. There are two sets of X-shaped bracings between front legs and rear legs. The pram may be folded backward and forward and transversely with small folding force and to form vertical front and rear wheels.

Chinese patent publication number CN204452543U discloses a self-supporting foldable baby stroller that includes two side edge supports arranged symmetrically left and right, and each side edge support can rotate in the side edge plane perpendicular to the leftright direction. Each side edge support comprises a front wheel support, a rear wheel support, an upper push rod, a lower push rod, a first linkage rod and a second linkage rod, wherein a connecting base is arranged on the rear wheel support, the front wheel support is connected to the connecting base in a pivot mode, the upper push rod is connected to the lower push rod in a pivot mode, the lower push rod is connected to the connecting base in a pivot mode, the first linkage rod is connected to the front wheel support in a pivot mode, the second linkage rod is connected to the rear wheel support in a pivot mode and connected with the first linkage rod in a pivot mode, the second linkage rod is connected with the upper push rod in a pivot mode, and any one or more of the upper push rod, the lower push rod and the second linkage rod are provided with standing feet. After a stroller frame is folded, front wheels and/or rear wheels and the standing feet form a standing and supporting structure.

Chinese patent publication number CN101898575A discloses a folding baby stroller, which comprises a frame, a front wheel assembly and a back wheel assembly, wherein the frame comprises a front wheel bracket, a back wheel bracket and a push rod rotatably connected to the upper end of the back wheel bracket; the rear end of the front wheel bracket and the upper end of the back wheel bracket are in pin joint and fixed; the back wheel bracket is provided with a sliding sleeve capable of sliding up and down; a front support rod is in pin joint between the sliding sleeve and the front wheel bracket; a rear support rod is in pin joint between the sliding sleeve and the push rod; and when the frame is unfolded, the sliding sleeve moves to the highest position of the back wheel bracket and is locked by a locking mechanism on the back wheel bracket.

### Summary

It is an object of the present invention to provide a foldable stroller frame and a foldable stroller to solve the existing problems of the foldable stroller, such as the structure is complicated and the folding is not convenient.

In order to achieve the propose, the present invention adopts the following technical solutions:

A foldable stroller frame includes a front wheel bracket; a rear wheel bracket, rotatably connected to the front wheel bracket, a side handrail, rotatably connected to an upper end of the rear wheel bracket; a rear supporting bar, rotatably connected to the rear wheel bracket at a first position of the the rear wheel bracket; a push bar, rotatably connected to the side handrail and the rear supporting bar by different shafts; a slidable sleeve, disposed on the rear wheel bracket; a front wheel bracket link, wherein a first end of the front wheel bracket link is rotatably connected to the slidable sleeve, and a second end of the front wheel bracket link is rotatably connected to the front wheel bracket; and a side handrail link, wherein a first end of the side handrail link is rotatably connected to the slidable sleeve, and a second end of the side handrail link is connected to the side handrail.

According to the invention, the foldable stroller frame further comprises a first supporting bar, a second supporting bar, a third supporting bar and a fourth supporting bar.

The first supporting bar and the second supporting bar are rotatably connected to each other at middle portions of the supporting bar and the lower cross supporting bar.

A first end of the second supporting bar is rotatably connected to a first end of the fourth supporting bar, a second end of the second supporting bar is rotatably connected to a first end of a second wheel bracket link of the front wheel bracket link, a second end of the fourth supporting bar is rotatably connected to a first end of a first wheel bracket link of the front wheel bracket link;

A first end of the first supporting bar is rotatably connected to a first end of third supporting bar, a second end of the first supporting bar is rotatably connected to a second end of the first wheel bracket link of the front wheel bracket link, a second end of the third supporting bar is rotatably connected to a second end of the second wheel bracket link.

In one embodiment of the foldable stroller frame, the foldable stroller frame further comprises an upper cross supporting bar and a lower cross supporting bar which are rotatably connected to each other and intersect at their middle portion.

A first end of the upper cross supporting bar is rotatably connected to a right rear wheel bracket of the rear wheel bracket, and a second end of the upper cross supporting bar is rotatably connected with a first connector, the first connector is rotatably connected to the first wheel bracket link, and a rotation center of the first connector is coaxial with that of the first wheel bracket link and the slidable sleeve.

A first end of the lower cross supporting bar is rotatably connected to a first rear wheel bracket of the rear wheel bracket, and a second end of the lower cross supporting bar is rotatably connected with a second connector, the second connector is rotatably connected to the second wheel bracket link, and a rotation center of the second connector is coaxial with that of the slidable sleeve and the second wheel bracket link.

In one embodiment of the foldable stroller frame, the foldable stroller frame further comprises a front handrail, which comprises a front handrail middle rod, and two front handrail links.

The two front handrail links are arranged symmetrically and rotatably connected to two ends of the front handrail middle rod respectively, and an end of each of the two front handrail links that is not connected to the front handrail middle rod is rotatably connected with a front handrail plug that is inserted into a side handrail link.

In one embodiment of the foldable stroller frame, the foldable stroller frame further comprises a first push handle and a second push handle rotatably connected to each other, wherein the first push handle and the second push handle are rotatably connected to the push bar.

In one embodiment of the foldable stroller frame, a locking member is provided between the first push handle and the second push handle and the locking member is used for locking and unlocking the first push handle and the second push handle.

In one embodiment of the foldable stroller frame, a locking mechanism for locking the whole stroller frame is provided between the side handrail and the push bar, in a case where the locking member unlocks the first push handle and the second push handle and presses against the push bar downwardly and forwardly, the locking mechanism automatically releases the locking of the whole stroller frame.

In one embodiment of the foldable stroller frame, the foldable stroller frame further comprises a seat bar and a seat bar link, wherein a first end of the seat bar is rotatably connected to the front wheel bracket link, a first end of the seat bar link is rotatably connected to a second end of the seat bar, a second end of the seat bar link is rotatably connected to the rear wheel bracket, and a rotation center of the seat bar link and the rear wheel bracket is coaxial with that of the rear supporting bar and the rear wheel bracket.

In one embodiment of the foldable stroller frame, the foldable stroller frame further comprises a seat bar slidable sleeve rotatably connected to the side handrail, wherein a seat bar is sildagly arranged within the seat bar slidable sleeve, one end of the seat bar is rotatably connected to the side handrail link, and an upper end of the side handrail link is rotatably connected with a front handrail socket, and a rotation center of the front handrail socket is coaxial with that of each of the two front handrail links and the side handrail, and the front handrail plug of the front handrail is inserted into the front handrail socket.

The present invention further provides a foldable stroller comprising the foldable stroller frame described above.

According to the configuration described above, the foldable stroller frame of the present invention can be folded more conveniently and quickly, and has a small volume and is convenient to carry and store after being folded, thus bring great convenience for the user. Furthermore, with the above configuration, it is possible to make the whole structure of stroller more stable as the stroller is unfolded.

### Brief Description of Drawings

FIG. 1 is a perspective structural schematic view illustrating a foldable stroller frame according to a first embodiment.
FIG. 2 is a side view illustrating the foldable stroller frame according to the first embodiment.
FIG. 3 is a schematic view illustrating a state of the foldable stroller frame according to the first embodiment with the upper half thereof being concealed.
FIG. 4 is a schematic view illustrating another state of the foldable stroller frame according to the first embodiment with the upper half thereof being concealed.
FIG. 5 is a schematic view illustrating a half-folded state of the foldable stroller frame according to the first embodiment.
FIG. 6 is a side view illustrating a half-folded state of the foldable stroller frame according to the first embodiment.
FIG. 7 is a schematic view illustrating a full-folded state of the foldable stroller frame according to the first embodiment.
Figure 8 is a perspective structural schematic view illustrating a foldable stroller frame according to a second embodiment.
Figure 9 is a side view illustrating the foldable stroller frame according to the second embodiment.
Figure 10 is a schematic view illustrating a half-folded state of the foldable stroller frame according to the second embodiment.
Figure 11 is a side view illustrating a half-folded state of the foldable stroller frame according to the second embodiment.
Figure 12 is a schematic view illustrating a full-folded state of the foldable stroller frame according to the second embodiment.

### Detailed Description

Various embodiments will be further described below with reference to the drawings and by way of specific embodiments.

### First embodiment

The present embodiment provides a foldable stroller frame, and in the present embodiment, the directions such as "front", "rear", "left", "right", "upper" and "lower" as involved herein shall be illustrated as the direction toward which the user faces as he/she pushes the stroller. Namely, the front means the direction toward which the user faces directly as he/she pushes the stroller, based on this, each of the directions will be inllustrated.

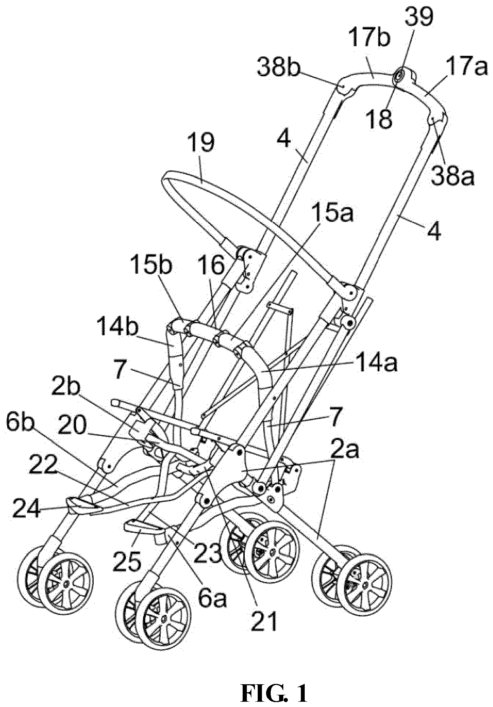

As shown in Figs. 1-7, the foldable stroller frame includes a front wheel bracket 1, a rear wheel bracket 2, a side handrail 3, a push bar 4, a rear supporting bar 5, a front wheel bracket link 6, a side handrail link 7, a slidable sleeve 8, a front wheel assembly 11 and a rear wheel assembly 12.

The front wheel assembly 11 is mounted on the front wheel bracket 1, and the rear wheel assembly 12 is mounted on the rear wheel bracket 2.

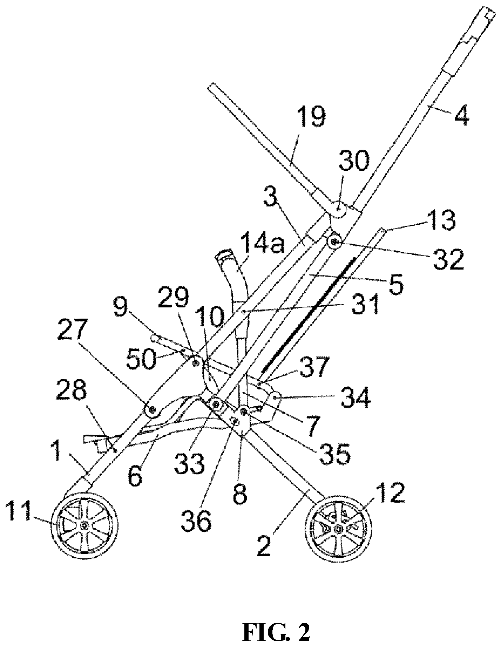

As shown in Fig. 2, the front wheel bracket 1 is rotatably connected to the rear wheel bracket 2 by means of a pin 27. In particulary, the rear wheel bracket 2 includes a left rear wheel bracket 2a (a first rear wheel bracket 2a) and a right rear wheel bracket 2b (a second rear wheel bracket 2b) that are rotatably connected to two sides of the front wheel bracket 1 by means of the pin 27, respectively.

An upper end of the rear wheel bracket 2 is rotatably connected to the side handrail 3 by means of a pin 29, and a rear end thereof (namely, at a first position of the the rear wheel bracket 2) is rotatably connected to the rear supporting bar 5 by means of a pin 33. The side handrail 3 is rotatably connected to the push bar 4 by means of a pin 30, and the push bar 4 is also connected with a front hood bar 19. In other words, the side handrails 3, the push bar 4 and the front hood bar 19 are rotatably connected to one another by the pin 30 in a coaxial manner, and the push bar 4 and the rear supporting bar 5 are rotatably connected to each other by means of a pin 32. In the present embodiment, a lower end of the push bar 4 is rotatably connected to the rear supporting bar 5 by means of the pin 32.

The rear wheel bracket 2 is provided with a slidable sleeve 8 which is rotatably connected to a front wheel bracket link 6 by a pin 36 and which is rotatably connected to a side handrail link 7 by a pin 35. One end of the front wheel bracket link 6 that is not connected to the slidable sleeve 8 is rotatably connected to the front wheel bracket 1 by means of a pin 28, and one end of the side handrail link 7 that is not connected to the slidable sleeve 8 is rotatably connected to the side handrail 3 by a pin 31. In particular, the slidable sleeve 8 may includes a slidable sleeve 8a and a slidable sleeve 8b in the present embodiment.

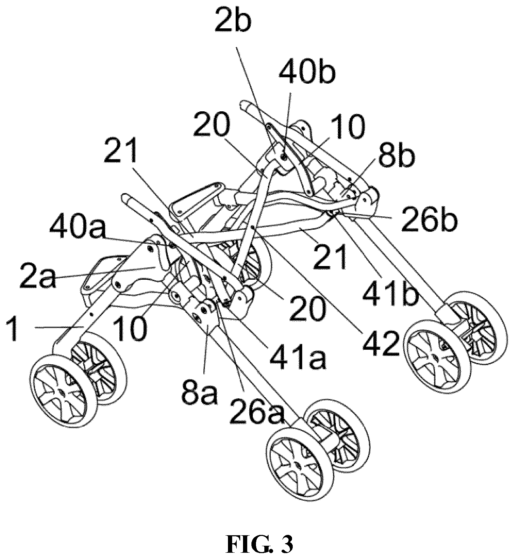

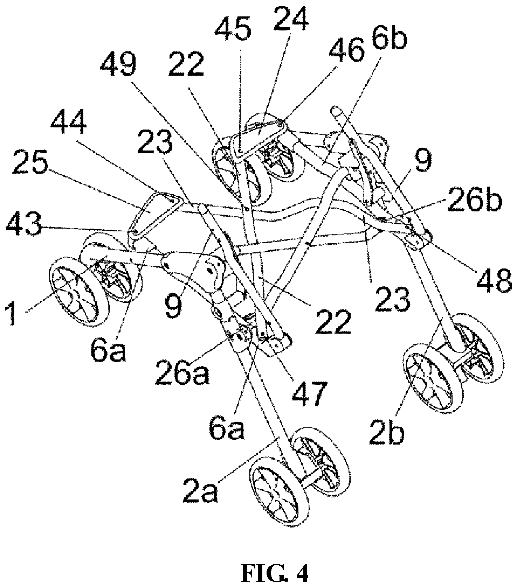

According to the present embodiment, as illustrated in Figs. 3 and 4, the foldable baby stroller further includes a left rear supporting bar 23 (a secnd supporting bar 23) and a right rear supporting bar 22 (a first supporting bar 22), which are rotatably connected to each other and intersect at their middle portion by a pin 49. One end of the left rear supporting bar 23 is rotatably connected to a left front supporting bar 25 (a fourth supporting bar 25) by a pin 44, and the other end thereof is rotatably connected to a right front wheel bracket link 6b (a second wheel bracket link) of the front wheel bracket link 6 by means of a pin 48. One end of the right rear supporting bar 22 is rotatably connected to a right front supporting bar 24 (a third supporting bar 24) by a pin 45, and the other end thereof is rotatably connected to a left front wheel bracket link 6a (a first wheel bracket link 6a) of the front wheel bracket link 6 by means of a pin 47. An end of the left front supporting bar 25 that is not connected to the left rear supporting bar 23 is rotatably connected to an end of the left front wheel bracket link 6a that is not connected to the right rear supporting bar 22, and an end of the right front supporting bar 24 that is not connected to the right rear supporting bar 22 is rotatably connected to an end of the right front wheel bracket link 6b that is not connected the left rear supporting bar 23 by a pin 46.

In the present embodiment, the foldable baby stroller as described above may further include an upper cross supporting bar 20 and a lower cross supporting bar 21, which are rotatably connected to each other and intersect at their middle portion by a pin 42. Optionally, an end of the upper cross supporting bar 20 is rotatably connected to a right rear wheel bracket 2b of the rear wheel bracket 2 by means of a pin 40b, and the other end thereof is rotatably connected to a left U-shaped member 26a (a first connector 26a) by a pin 41a. The left U-shaped member 26a is rotatably connected to the left front wheel bracket link 6a by a pin 36, and a rotation center of the left U-shaped member 26a is coaxial with that of the left front wheel bracket link 6a and the slidable sleeve 8.

One end of the lower cross supporting bar 21 is rotatably connected to the left rear wheel bracket 2a of the rear wheel bracket 2 by a pin 40a, and the other end thereof is rotatably connected to a right U-shaped member 26b (a second connector 26b) by a pin 41b. The right U-shaped member 26b is rotatably connected to the right front wheel bracket link 6b by another pin 36, and a rotation center of the right U-shaped member 26b is coaxial with that of the right front wheel bracket link 6b and the slidable sleeve 8.

In the present embodiment, the foldable baby stroller described above may further include a front handrail. In particular, the front handrail may include a front handrail middle rod 16, and two front handrail links ( including a left front handrail link 15a and a right front handrail link 15b) arranged symmetrically and rotatably connected to two ends of the front handrail middle rod 16. An end of each front handrail link that is not connected to the front handrail middle rod 16 is rotatably connected to front handrail plugs (including a left front handrail plug 14a connected to the left front handrail link 15a and a right front handrail plug 14b connected to the right front handrail link 15b). After the front handrail middle rod 16, the front handrail link and the front handrail plug are assembled toghether, the assembled configuration may be inserted into the side handrail link 7 by means of the front handrail plug.

According to present embodiment, a left push handle 17a (a first push handle 17a) and a right push handle 17b (a second push handle 17b) are rotatably connected to upper ends of the push bars 4 at two sides by means of pins 38a, 38b, respectively. The left push handle 17a and the right push handle 17b are rotatably connected to each otherby a pin 39. Moreover, a locking member is disposed between the left push handle 17a and the right push handle 17b and is used to lock and unlock the left push handle 17a and the right push handle 17b. The locking member in the present embodiment may be an unlock button 18.

In the present embodiment, a locking mechanism 341 for locking the whole stroller frame is further arranged between the side handrail 3 and the push bar 4. When the locking meber unlocks the left push handle 17a and the right push handle 17b and presses against the push bar 4 downwardly and forwardly, the locking mechanism 341 can automatically release the locking of the whole stroller frame, thereby completing the folding of the whole stroller frame.

According to the present embodiment, the foldable baby stroller described above may further be provided with a seat bar 9 rotatably connected to the front wheel bracket link 6 by a pin 34. An end of the seat bar 9 that is not connected to the front wheel bracket link 6 is rotatably connected to a seat bar link 10 by a pin 50, and an end of the seat bar link 10 that is not connected to the seat bar 9 is rotatably connected to the rear wheel bracket 2 by a pin 33. Further, a rotation center of the seat bar link 10 and the rear wheel bracket 2 is coaxial with that of the rear supporting bar 5 and the rear wheel bracket 2. A backrest bar 13 may be rotatably connected to the seat bar 9 by means of a pin 37.

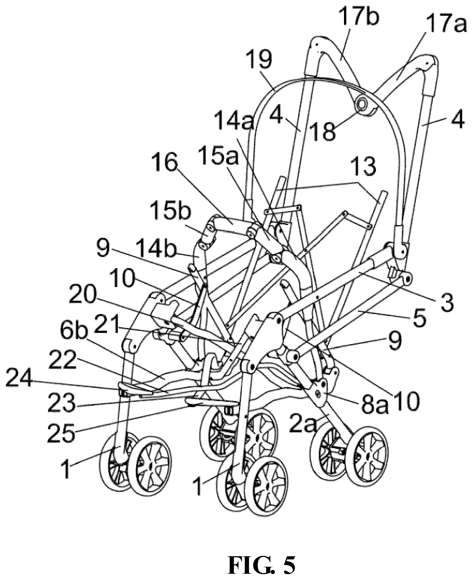

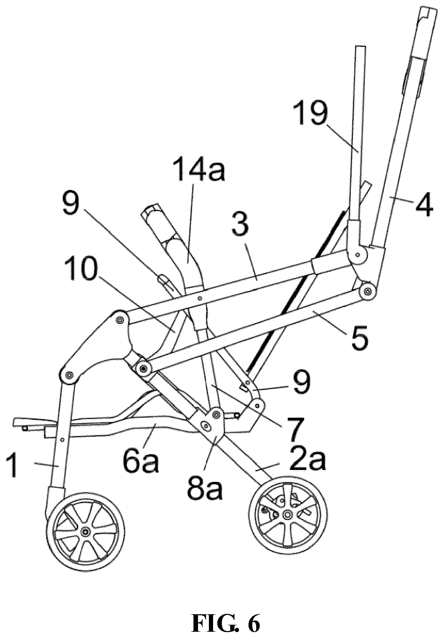

In order to fold the foldable stroller frame of the present embodiment, firstly, the locking relation between the left push handle 17a and the right push handle 17b may be released by the locking member. Subsequently, the left push handle 17a and the right push handle 17b may be pressed downwardly and forwardly such that the locking mechanism 341 between the side handrail 3 and the push bar 4 is automatically unlocked. Next, the push bar 4 may be pressed downward continuely, and at this time the state of the foldable stroller frame is shown as in Fig. 5 and Fig 6.

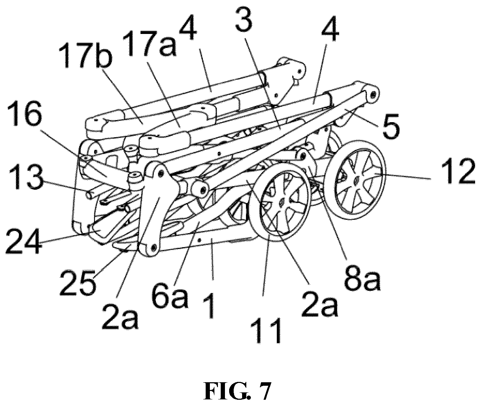

After that, the whole stroller frame may be further folded forwardly and downwardly. The full folding of the whole foldable stroller frame may be achieved by the interaction relation among the components described above, and the full-folded state is shown as in Fig. 7.

A foldable stroller including the foldable stroller frame as described above may be further provided by the present invention . With the configuration of the foldable stroller frame as described above, the stroller frame can be folded more conveniently and quickly, and has a small volume and is convenient to carry and store after being folded, thus bring great convenience for the user. Furthermore, with the above configuration, it is possible to make the whole structure of stroller more stable as the stroller is unfolded.

### Second embodiment

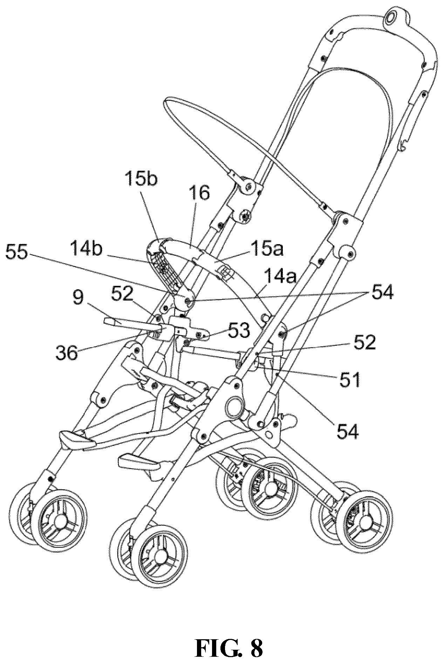

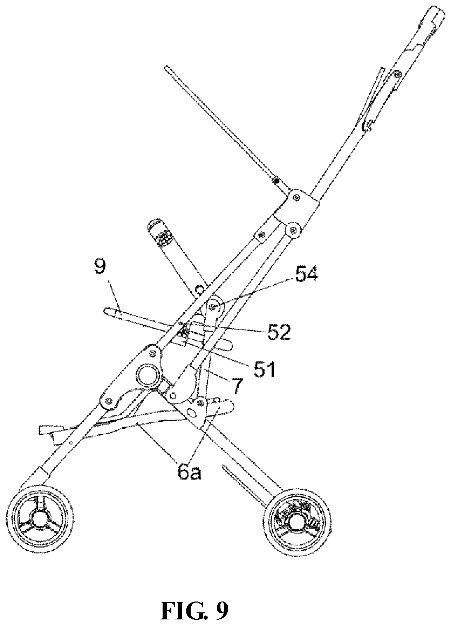

The present embodiment differs from the first embodiment in that the seat bar 9 of the present embodiment is not rotatably connected to the front wheel bracket link 6, and as shown in Figs. 8-12, the seat bar 9 is slidably provided within the seat bar slidable sleeve 51. The seat bar slidable sleeve 51 is rotatably connected to the side handrail 3 by a pin 52, an end of the seat bar 9 may be rotatably connected to the side handrail link 7 by a pin 53, and an upper end of the side handrail link 7 is rotatably connected to a front handrail socket 55. In particular, a connecting member is arranged on the side handrail and is rotatably connected to the front handrail socket 55, and a rotation center of the front handrail socket 55 is coaxial with a rotation center of the front handrail link 7 and the side handrail 3. Namely, the rotational connection among the front handrail socket 55, a front handrail link 7 and the side handrail 3 may be achieved by a pin 54, and then the front handrail may be inserted into the front handrail socket 55 by the front handrail plug.

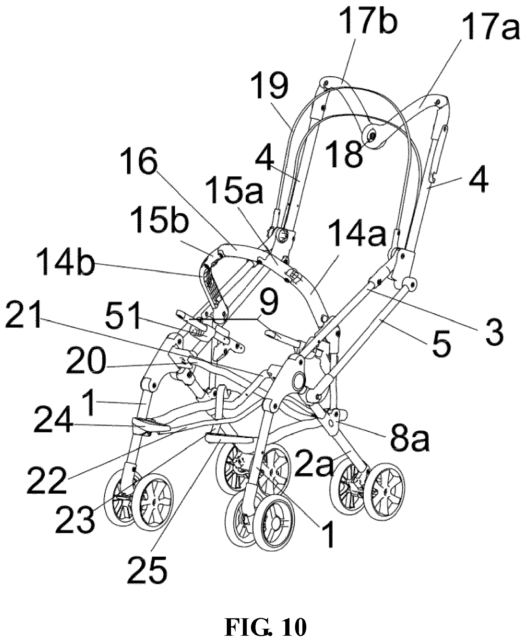

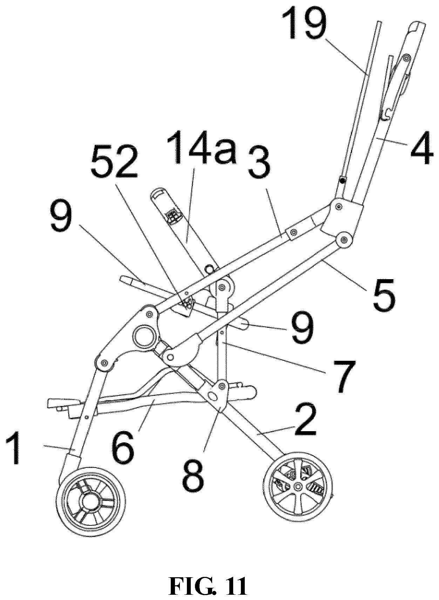

In order to fold the foldable stroller frame of the present embodiment, firstly, the locking relation between the left push handle 17a and the right push handle 17b may be released by the locking member. Subsequently, the left push handle 17a and the right push handle 17b may be pressed downwardly and forwardly such that the locking mechanism between the side handrail 3 and the push bar 4 is automatically unlocked. Next, the push bar 4 may be pressed downward continuely, and at this time the state of the foldable stroller frame may be illustrated as in Fig. 10 and Fig. 11.

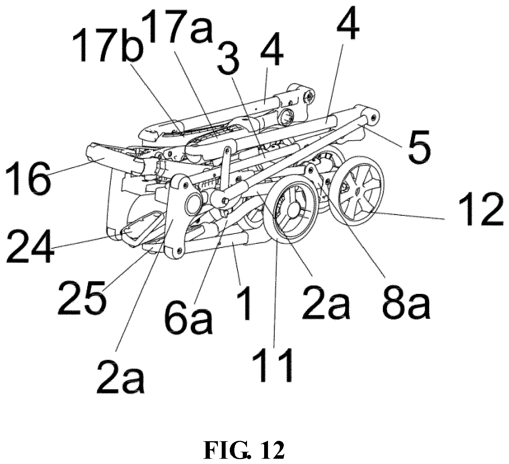

After that, the whole stroller frame may be further folded forwardly and downwardly. The full folding of the whole foldable stroller frame may be achieved by the interaction relation among the components described above, and the full-folded state is shown as in Fig. 12.

The above-described embodiments are only the examples madefor illustrating the present invention and are not the limit of the embodiments. Various other changes or variations may be made within the scope of the claims.

## Claims

1. A foldable stroller frame, comprising:
a front wheel bracket (1);
a rear wheel bracket (2), rotatably connected to the front wheel bracket (1);
a side handrail (3), rotatably connected to an upper end of the rear wheel bracket (2);
a rear supporting bar (5), rotatably connected to the rear wheel bracket (2) at a first position of the the rear wheel bracket (2);
a push bar (4), rotatably connected to the side handrail (3) and the rear supporting bar (5) by different shafts;
a slidable sleeve (8), disposed on the rear wheel bracket (2);
a front wheel bracket link (6), wherein a first end of the front wheel bracket link (6) is rotatably connected to the slidable sleeve (8), and a second end of the front wheel bracket link (6) is rotatably connected to the front wheel bracket (1); and
a side handrail link (7), wherein a first end of the side handrail link (7) is rotatably connected to the slidable sleeve (8), and a second end of the side handrail link (7) is connected to the side handrail (3);
**characterized in that**,
the foldable stroller frame further comprises a first supporting bar (22), a second supporting bar (23), a third supporting bar (24) and a fourth supporting bar (25), wherein,
the first supporting bar (22) and the secnd supporting bar (23) are rotatably connected to each other at middle portions of the first supporting bar (22) and the secnd supporting bar (23);
a first end of the second supporting bar (23) is rotatably connected to a first end of the fourth supporting bar (25), a second end of the second supporting bar (23) is rotatably connected to a first end of a second wheel bracket link (6b) of the front wheel bracket link (6), a second end of the fourth supporting bar (25) is rotatably connected to a first end of a first wheel bracket link (6a) of the front wheel bracket link (6); and
a first end of the first supporting bar (22) is rotatably connected to a first end of third supporting bar (24), a second end of the first supporting bar (22) is rotatably connected to a second end of the first wheel bracket link (6a) of the front wheel bracket link (6), a second end of the third supporting bar (24) is rotatably connected to a second end of the second wheel bracket link (6b).

2. The foldable stroller frame according to claim 1, further comprising an upper cross supporting bar (20) and a lower cross supporting bar (21) which are rotatably connected to each other and intersect at middle portions of the supporting bar (20) and the lower cross supporting bar (21), wherein,
a first end of the upper cross supporting bar (20) is rotatably connected to a right rear wheel bracket (2b) of the rear wheel bracket (2), and a second end of the upper cross supporting bar (20) is rotatably connected with a first connector (26a), the first connector (26a) is rotatably connected to the first wheel bracket link (6a), and a rotation center of the first connector (26a) is coaxial with that of the first wheel bracket link (6a) and the slidable sleeve (8); and
a first end of the lower cross supporting bar (21) is rotatably connected to a first rear wheel bracket (2a) of the rear wheel bracket (2), and a second end of the lower cross supporting bar (21) is rotatably connected with a second connector (26b), the second connector (26b) is rotatably connected to the second wheel bracket link (6b), and a rotation center of the second connector (26b) is coaxial with that of the slidable sleeve (8) and the second wheel bracket link (6b).

3. The foldable stroller frame according to claim 1, further comprising a front handrail, which comprises a front handrail middle rod (16), and two front handrail links (15a, 15b), wherein,
the two front handrail links (15a, 15b) are arranged symmetrically and rotatably connected to two ends of the front handrail middle rod (16) respectively, and an end of each of the two front handrail links (15a, 15b) that is not connected to the front handrail middle rod (16) is rotatably connected with a front handrail plug (14a, 14b) that is inserted into a side handrail link (7).

4. The foldable stroller frame according to claim 3, further comprising a first push handle (17a) and a second push handle (17b) rotatably connected to each other, wherein the first push handle (17a) and the second push handle (17b) are rotatably connected to the push bar (4).

5. The foldable stroller frame according to claim 4, wherein a locking member (18) is provided between the first push handle (17a) and the second push handle (17b), and the locking member (18) is used for locking and unlocking the first push handle (17a) and the second push handle (17b).

6. The foldable stroller frame according to claim 5, wherein a locking mechanism (341) for locking the whole stroller frame is provided between the side handrail (3) and the push bar (4), in a case where the locking member (18) unlocks the first push handle (17a) and the second push handle (17b) and presses against the push bar (4) downwardly and forwardly, the locking mechanism (341) automatically releases the locking of the whole stroller frame.

7. The foldable stroller frame according to claim 6, further comprising:
a seat bar (9), wherein a first end of the seat bar (9) is rotatably connected to the front wheel bracket link (6); and
a seat bar link (10), wherein a first end of the seat bar link (10) is rotatably connected to a second end of the seat bar (9), a second end of the seat bar link (10) is rotatably connected to the rear wheel bracket (2), and a rotation center of the seat bar link (10) and the rear wheel bracket (2) is coaxial with that of the rear supporting bar (5) and the rear wheel bracket (2).

8. The foldable stroller frame according to claim 6, further comprising a seat bar slidable sleeve (51) rotatably connected to the side handrail (3), wherein a seat bar (9) is sildagly arranged within the seat bar slidable sleeve (51), one end of the seat bar (9) is rotatably connected to the side handrail link (7), and an upper end of the side handrail link (7) is rotatably connected with a front handrail socket (55), and a rotation center of the front handrail socket (55) is coaxial with that of each of the two front handrail links (15a, 15b) and the side handrail (3), and the front handrail plug (14a, 14b) of the front handrail is inserted into the front handrail socket (55).

9. A foldable stroller, comprising the foldable stroller frame according to any one of claims 1-8.

## Patentansprüche

1. Ein zusammenklappbares Kinderwagengestell, das umfasst:
eine Vorderradhalterung (1);
eine Hinterradhalterung (2), die drehbar mit der Vorderradhalterung (1) verbunden ist;
einen seitlichen Handlauf (3), der drehbar mit einem oberen Ende der Hinterradhalterung (2) verbunden ist;
eine hintere Stützstange (5), die drehbar mit der Hinterradhalterung (2) an einer ersten Position der Hinterradhalterung (2) verbunden ist;
eine Schubstange (4), die über unterschiedliche Wellen drehbar mit dem seitlichen Handlauf (3) und der hinteren Stützstange (5) verbunden ist;
eine verschiebbare Hülse (8), die an der Hinterradhalterung (2) angeordnet ist;
eine Verbindung mit der Vorderradhalterung (6), wobei ein erstes Ende der Verbindung mit der Vorderradhalterung (6) drehbar verbunden ist mit der verschiebbaren Hülse (8), und ein zweites Ende der Verbindung mit der Vorderradhalterung (6) drehbar verbunden ist mit der Vorderradhalterung (1); und eine
seitliche Handlaufverbindung (7), wobei ein erstes Ende der seitlichen Handlaufverbindung (7) drehbar verbunden ist mit der verschiebbaren Hülse (8) und ein zweites Ende der seitlichen Handlaufverbindung (7) mit dem seitlichen Handlauf (7) verbunden. ist;
**dadurch gekennzeichnet, dass**
das zusammenklappbare Kinderwagengestell weiterhin eine erste Haltestange (22) umfasst, eine zweite Haltestange (23), eine dritte Haltestange (24) und eine vierte Haltestange (25), wobei die erste Haltestange (22) und die zweite Haltestange (23) drehbar miteinander verbunden sind, in mittleren Abschnitten der ersten Haltestange (22) und der zweiten Haltestange (23);
ein erstes Ende der zweiten Haltestange (23) drehbar verbunden ist mit einem ersten Ende der vierten Haltestange (25), ein zweites Ende der zweiten Haltestange (23) drehbar verbunden ist mit einem ersten Ende einer zweiten Radhalterungsverbindung (6b) der Verbindung mit der Vorderradhalterung (6), ein zweites Ende der vierten Haltestange (25) drehbar verbunden ist mit einer ersten Radhalterungsverbindung (6a) der Verbindung mit der Vorderradhalterung (6); und
ein erstes Ende der ersten Haltestange (22) drehbar verbunden ist mit einem ersten Ende der dritten Haltestange (24), ein zweites Ende der ersten Haltestange (22) drehbar verbunden ist mit einem zweiten Ende der ersten Radhalterungsverbindung (6a) der Verbindung mit der Vorderradhalterung (6), ein zweites Ende der dritten Haltestange (24) drehbar verbunden ist mit einem zweiten Ende der zweiten Radhalterungsverbindung (6b).

2. Das zusammenklappbare Kinderwagengestell nach Anspruch 1, weiterhin umfassend eine obere querverlaufende Haltestange (20) und eine untere querverlaufende Haltestange (21, die drehbar miteinander verbunden sind und sich in einem mittleren Abschnitt der Haltestange (20) und der unteren querverlaufenden Haltestange (21), kreuzen, wobei,
ein erstes Ende der oberen querverlaufenden Haltestange (20) drehbar verbunden ist mit einer rechten Hinterradhalterung (2b) der Hinterradhalterung (2), und ein zweites Ende der querverlaufenden Haltestange (20) drehbar verbunden ist mit einem ersten Verbindungsstück (26a), das erste Verbindungsstück (26a) ist dabei drehbar verbunden mit dem ersten Radhalterungsverbindung (6a), und ein Drehzentrum des ersten Verbindungsstücks (26a) ist koaxial mit dem der ersten Radhalterungsverbindung (6a) und der verschiebbare Hülse (8); und
ein erstes Ende der unteren querverlaufenden Haltestange (21) drehbar verbunden ist mit der ersten Hinterradhalterung (2a) der Hinterradhalterung (2), und ein zweites Ende der unteren querverlaufenden Haltestange (21) drehbar verbunden ist mit einem zweiten Verbindungsstück (26b) und das zweite Verbindungsstück (26b) drehbar verbunden ist mit der zweiten Radhalterungsverbindung (6b), und ein Drehzentrum des ersten Verbindungsstücks (26b) koaxial mit dem der ersten Radhalterungsverbindung (8) und der verschiebbare Hülse (6b) ist.

3. Das zusammenklappbar Kinderwagengestell nach Anspruch 1, enthält weiterhin einen vorderen Handlauf, der eine Mittelstange des vorderen Handlaufs (16) umfasst und zwei Verbindungsstücke der vorderen Handläufe (15a, 15b), wobei,
die beiden Verbindungsstücke der vorderen Handläufe (15a, 15b) symmetrisch angeordnet und drehbar verbunden sind mit jeweils zwei Endstücken der Mittelstange des vorderen Handlaufs (16), und ein Endstück jeder der beiden Verbindungsstücke der vorderen Handläufe (15a, 15b), das nicht mit der Mittelstange des vorderen Handlaufs (16) verbunden ist, drehbar verbunden mit ist einem vorderen Handlauf - Einsteckteil (14a, 14b), das in eine seitliche Handlaufverbindung (7) eingesetzt wird.

4. Das zusammenklappbare Kinderwagengestell nach Anspruch 3, das außerdem einen ersten Schiebegriff (17a) und einen zweiten Schiebegriff (17b) umfasst, drehbar miteinander verbunden, wobei der erste Schiebegriff (17a) und der zweite Schiebegriff (17b) drehbar mit der Schubstange (4) verbunden sind.

5. Das zusammenklappbare Kinderwagengestell nach Anspruch 4, wobei ein Verriegelungselement (18) zwischen dem ersten Schiebegriff (17a) und dem zweiten Schiebegriff (17b) vorgesehen ist, und das Verriegelungselement (18) zum Ver- und Entriegeln des ersten Schiebegriffs (17a) und des zweiten Schiebegriffs (17b) verwendet wird.

6. Das zusammenklappbare Kinderwagengestell nach Anspruch 5, wobei ein Verriegelungsmechanismus (341) zur Verriegelung des ganzen Kinderwagengestells vorgesehen ist zwischen dem seitlichen Handlauf (3) und der Schubstange (4), für den Fall, dass das Verriegelungselement (18) den ersten Schiebegriff (17a) und den zweiten Schiebegriff (17b) entriegelt und gegen die Schubstange (4) nach unten und vorwärts drückt, löst der Verriegelungsmechanismus (341) automatisch die Verriegelung des gesamten Kinderwagengestells.

7. Das zusammenklappbare Kinderwagengestell nach Anspruch 6, weiterhin umfassend:
eine Sitzstange (9), wobei ein erstes Ende der Sitzstange (9) drehbar verbunden ist mit der Verbindung mit der Vorderradhalterung (6); und
eine Sitzstangenverbindung (10), wobei ein erstes Ende der Sitzstangenverbindung (10) drehbar verbunden ist mit einem zweiten Ende der Sitzstange (9), ein zweites Ende der Sitzstangenverbindung (10) drehbar verbunden ist mit der Hinterradhalterung (2), und ein Drehzentrum der Sitzstangenverbindung (10) und der Hinterradhalterung (2) koaxial mit dem der rückwärtigen Haltestange (5) und der Hinterradhalterung (2) ist.

8. Das zusammenklappbare Kinderwagengestell nach Anspruch 6, weiterhin umfassend eine verschiebbare Hülse der Sitzstange (51), drehbar verbunden mit dem seitlichen Handlauf (3), wobei eine Sitzstange (9) verschiebbar innerhalb der verschiebbaren Hülse der Sitzstange (51) angeordnet ist, ein Ende der Sitzstange (9) ist drehbar verbunden mit der seitlichen Handlaufverbindung (7), und ein oberes Ende der seitlichen Handlaufverbindung (7) ist drehbar verbunden mit einem vorderen Handlaufsteckplatz (55), und ein Drehzentrum der vorderen Handlaufsteckplatz (55) ist koaxial mit dem jeder der beiden vorderen Handlaufverbindungen (15a, 15b) und der seitliche Handlauf (3), und der vordere Einsteckteil (14a, 14b) des vorderen Handlaufs wird in den vorderen Handlaufsteckplatz (55) eingesteckt.

9. Ein zusammenklappbarer Kinderwagen, der das zusammenklappbare Kinderwagengestell nach irgendeinem der Ansprüche 1-8 enthält.

## Revendications

1. Cadre de poussette pliant, comprenant :
un support de roues avant (1) ;
un support de roues arrière (2), relié de manière pivotante au support de roues avant (1) ;
une main courante latérale (3), reliée de manière pivotante à une extrémité supérieure du support de roues arrière (2) ;
une barre de support arrière (5), reliée de manière pivotante au support de roues arrière (2) dans une première position du support de roues arrière (2) ;
une barre de poussée (4), reliée de manière rotative à la main courante latérale (3) et à la barre de support arrière (5) par différentes tiges ;
un manchon coulissant (8), disposé sur le support de roues arrière (2) ;
une liaison de support de roues avant (6), dans lequel une première extrémité de la liaison de support de roues avant (6) est reliée de manière rotative au manchon coulissant (8), et une seconde extrémité de la liaison de support de roues avant (6) est reliée de manière rotative au support de roues avant (1) ; et
une liaison de main courante latérale (7), dans lequel une première extrémité de la liaison de main courante latérale (7) est reliée de manière rotative au manchon coulissant (8), et une seconde extrémité de la liaison de main courante latérale (7) est reliée à la main courante latérale (3) ;
**caractérisé en ce que**,
le cadre de poussette pliant comprend en outre une première barre de support (22), une deuxième barre de support (23), une troisième barre de support (24) et une quatrième barre de support (25), dans lequel,
la première barre de support (22) et la deuxième barre de support (23) sont reliées l'une à l'autre de manière rotative au niveau de parties médianes de la première barre de support (22) et de la deuxième barre de support (23) ;
une première extrémité de la deuxième barre de support (23) est reliée de manière rotative à une première extrémité de la quatrième barre de support (25), une seconde extrémité de la deuxième barre de support (23) est reliée de manière rotative à une première extrémité d'une seconde liaison de support de roues (6b) de la liaison de support de roues avant (6), une seconde extrémité de la quatrième barre de support (25) est reliée de manière rotative à une première extrémité d'une première liaison de support de roues (6a) de la liaison de support de roues avant (6) ; et
une première extrémité de la première barre de support (22) est reliée de manière rotative à une première extrémité de la troisième barre de support (24), une seconde extrémité de la première barre de support (22) est reliée de manière rotative à une seconde extrémité de la première liaison de support de roues (6a) de la barre de support de roues avant (6), une seconde extrémité de la troisième barre de support (24) est reliée de manière rotative à une seconde extrémité de la seconde liaison de support de roues (6b).

2. Cadre de poussette pliant selon la revendication 1, comprenant en outre une barre de support transversale supérieure (20) et une barre de support transversale inférieure (21) qui sont reliées l'une à l'autre de manière rotative et se recoupent au niveau de parties médianes de la barre de support (20) et de la barre de support transversale inférieure (21), dans lequel,
une première extrémité de la barre de support transversale supérieure (20) est reliée de manière rotative à un support de roues arrière droit (2b) du support de roues arrière (2), et une seconde extrémité de la barre de support transversale supérieure (20) est reliée de manière rotative à un premier connecteur (26a), le premier connecteur (26a) est relié de manière rotative à la première liaison de support de roues (6a), et un centre de rotation du premier connecteur (26a) est coaxial avec celui de la première liaison de support de roues (6a) et du manchon coulissant (8) ; et
une première extrémité de la barre de support transversale inférieure (21) est reliée de manière rotative à un premier support de roues arrière (2a) du support de roues arrière (2), et une seconde extrémité de la barre de support transversale inférieure (21) est reliée de manière rotative à un second connecteur (26b), le second connecteur (26b) est relié de manière rotative à la seconde liaison de support de roues (6b), et un centre de rotation du second connecteur (26b) est coaxial à celui du manchon coulissant (8) et de la seconde liaison de support de roues (6b).

3. Cadre de poussette pliant selon la revendication 1, comprenant en outre une main courante avant, qui comprend une tige médiane de main courante avant (16), et deux liaisons de main courante avant (15a, 15b), dans lequel,
les deux liaisons de main courante avant (15a, 15b) sont agencées reliées respectivement de manière symétrique et pivotante aux deux extrémités de la tige médiane de main courante avant (16), et une extrémité de chacune des deux liaisons de main courante avant (15a, 15b) qui n'est pas reliée à la tige médiane de main courante avant (16) est reliée de manière rotative à un connecteur de main courante avant (14a, 14b) qui est inséré dans une liaison de main courante latéral (7).

4. Cadre de poussette pliant selon la revendication 3, comprenant en outre une première poignée de poussée (17a) et une seconde poignée de poussée (17b) reliées l'une à l'autre de manière rotative, dans lequel la première poignée de poussée (17a) et la seconde poignée de poussée (17b) sont reliées de manière rotative à la barre de poussée (4).

5. Cadre de poussette pliant selon la revendication 4, dans lequel un élément de verrouillage (18) est prévu entre la première poignée de poussée (17a) et la seconde poignée de poussée (17b), et l'élément de verrouillage (18) est utilisé pour verrouiller et déverrouiller la première poignée de poussée (17a) et la seconde poignée de poussée (17b).

6. Cadre de poussette pliant selon la revendication 5, dans lequel un mécanisme de verrouillage (341) destiné à verrouiller l'ensemble du cadre de poussette est prévu entre la main courante latérale (3) et la barre de poussée (4), dans le cas où l'élément de verrouillage (18) déverrouille la première poignée de poussée (17a) et la seconde poignée de poussée (17b) et appuie contre la barre de poussée (4) vers le bas et vers l'avant, le mécanisme de verrouillage (341) libère automatiquement le verrouillage de l'ensemble du cadre de poussette.

7. Cadre de poussette pliant selon la revendication 6, comprenant en outre :
une barre de siège (9), dans lequel une première extrémité de la barre de siège (9) est reliée de manière rotative à la liaison de support de roues avant (6) ; et
une liaison de barre de siège (10), dans lequel une première extrémité de la liaison de barre de siège (10) est reliée de manière rotative à une seconde extrémité de la barre de siège (9), une seconde extrémité de la liaison de barre de siège (10) est reliée de manière rotative au support de roues arrière (2), et un centre de rotation de la liaison de barre de siège (10) et du support de roues arrière (2) est coaxial à celui de la barre de support arrière (5) et du support de roues arrière (2).

8. Cadre de poussette pliant selon la revendication 6, comprenant en outre un manchon coulissant de barre de siège (51) relié de manière rotative à la main courante latérale (3), dans lequel une barre de siège (9) est agencée de manière coulissante à l'intérieur du manchon coulissant de barre de siège (51), une extrémité de la barre de siège (9) est reliée de manière rotative à la liaison de main courante latérale (7), et une extrémité supérieure de la liaison de main courante latérale (7) est reliée de manière rotative à une douille de main courante avant (55), et un centre de rotation de la douille de main courante avant (55) est coaxial à celui de chacune des deux liaisons de main courante avant (15a, 15b) et de la main courante latérale (3), et le connecteur de main courante avant (14a, 14b) de la main courante avant est inséré dans la douille de main courante avant (55).

9. Poussette pliante, comprenant le cadre de poussette pliant selon l'une quelconque des revendications 1 à 8.
